# FASCICULE DE BREVET EUROPEEN

(11) **EP 3 294 424 B1**
(45) Date de publication et mention de la délivrance du brevet: **27.02.2019**
(21) Numéro de dépôt: 16726138.7
(22) Date de dépôt: 10.05.2016
(51) Int. Cl.: B29L 31/52, B32B 5/02, B32B 27/08, B32B 27/12, B32B 1/00, A63B 3/00, A63B 5/06, A63B 5/12, A63B 7/02, B29C 70/52

(54) **ELÉMENT DE PRÉHENSION D'UN ÉQUIPEMENT SPORTIF**
GREIFELEMENT FÜR SPORTAUSRÜSTUNG
GRIPPING MEMBER FOR SPORT EQUIPMENT

(30) Priorité: 13.05.2015 FR 1554343
(43) Date de publication de la demande: 21.03.2018
(73) Titulaire: Gymnova, 13012 Marseille (FR)
(72) Inventeur: Esteves, Olivier, 25000 Besancon (FR)
(74) Mandataire: Santarelli
(86) Numéro de dépôt international: PCT/FR2016/051083
(87) Numéro de publication internationale: WO 2016/181060

(56) Documents cités:
- CN-U- 202 822 585
- CN-U- 202 909 354
- DE-A1- 2 814 212
- DE-A1- 2 824 696
- NL-A- 6 512 877

## Description

La présente invention concerne un élément de préhension manuelle d'un équipement sportif, par exemple un porte-mains d'agrès de gymnastique.

Le porte-mains d'un agrès correspond à la zone de préhension de l'agrès, c'est-à-dire l'élément que le gymnaste saisit ou sur lequel il s'appuie et se suspend lors de la réalisation d'un exercice ou d'un programme de gymnastique. Un tel porte-mains est mis en oeuvre par exemple dans les barres asymétriques et les barres parallèles.

Bien que décrite dans le domaine de la gymnastique et en particulier en relation avec un porte-mains de barres asymétriques, la présente invention peut porter sur tout élément de préhension manuelle d'équipement sportif aménagé sur un noyau en matériau composite.

Les porte-mains de barres asymétriques connus dans l'état de la technique comportent un tube en matériau composite à base de fibres de verre, éventuellement renforcé par des fibres de carbone, et un plaquage en bois recouvrant le tube en matériau composite. Dans l'agrès appelé barres asymétriques, un porte-mains correspond à chacune des deux barres horizontales de l'agrès, et comporte de fait les zones de préhension que l'utilisateur saisit pour l'exécution de son programme.

Le plaquage en bois a plusieurs fonctions. Il offre un certain confort à l'utilisateur, améliore son adhérence (généralement désignée dans le domaine des équipements de sport par le terme anglophone « grip ») et donc sa bonne préhension, et permet l'absorption de l'humidité.

Néanmoins, le plaquage en bois des porte-mains présente un certain nombre d'inconvénients. En premier lieu, le bois nécessite un bon entretien pour avoir une bonne longévité. En outre, le bois est sensible à la chaleur et à l'humidité et peut rapidement se détériorer dans des conditions inadaptées d'utilisation, de transport, ou de stockage.

De plus le placage bois est soumis aux cycles de flexion du porte-mains lors du passage des gymnastes. Ces cycles de flexions participent au décollement et à la détérioration du placage bois.

En outre, lorsque le plaquage en bois est détérioré, il y a un risque de blessure lors de la préhension du porte-mains. Par exemple, l'utilisateur peut se couper sur un plaquage fendu, ou s'enfoncer des échardes.

Enfin, le plaquage est réalisé après mise en forme du noyau du porte-mains. Typiquement, pour la fabrication d'un porte-mains de barres asymétriques, une barre en matériau composite à ossature en fibre de verre est réalisée, puis est plaquée de bois dans un second temps. Le plaquage est généralement réalisé dans un autre atelier que la mise en forme du noyau. Cela entraine une certaine complexité logistique et des coûts de réalisation importants.

DE 28 14 212 A1 et DE 28 24 696 A1 dévoilent un élément de préhension d'un équipement sportif, comportant un noyau en matériau composite comportant une ossature fibreuse incluse dans une matrice polymérique, et comportant une couche externe enveloppant le noyau.

L'invention tend à résoudre au moins l'un des inconvénients précités.

L'invention porte en particulier sur un élément de préhension d'un équipement sportif, comportant un noyau en matériau composite comportant une ossature fibreuse incluse dans une matrice polymérique. L'élément de préhension comporte une couche externe enveloppant le noyau et comportant un matériau textile entrelacé, distinct de l'ossature, en partie noyé dans la matrice et émergeant de ladite matrice sur une surface extérieure de l'élément de préhension.

Un élément de préhension ainsi constitué a des caractéristiques mécaniques analogues aux éléments de préhension à noyau composite connus dans l'état de la technique, tout en en améliorant la qualité de la préhension, le confort, et en limitant les risques de blessure. En particulier, le matériau textile émergeant en surface de la matrice polymère permet une meilleure adhérence entre la main et l'élément de préhension. Les fibres du matériau textile émergeant en surface peuvent également offrir des caractéristiques d'absorption de l'humidité, recherchées dans les applications telles que les porte-mains d'agrès de gymnastique.

Selon un mode de réalisation, le matériau textile entrelacé est essentiellement constitué de fibres naturelles. Par exemple, le textile peut être constitué de fibres naturelles choisies parmi : des fibres de lin, des fibres de jute, des fibres de bambou, des fibres de chanvre.

La couche externe peut comporter une unique couche de matériau textile entrelacé. La couche externe peut comporter deux à quatre couches superposées de matériau textile entrelacé.

L'ossature fibreuse peut comporter, par exemple, des fibres de verre, et/ou des fibres de carbone.

L'invention porte également sur un porte-mains d'un agrès de gymnastique, et préférentiellement de barres asymétriques ou de barres parallèles, constitué d'un élément de préhension tel que précédemment décrit.

L'invention porte également sur un équipement sportif comportant un élément de préhension tel que précédemment décrit, ledit équipement sportif étant soit des barres asymétriques de gymnastique, soit des barres parallèles de gymnastique, soit un autre agrès de gymnastique, soit une rame, soit une pagaie, soit une perche de saut à la perche. D'autres équipements sportifs peuvent comporter un élément de préhension tel que précédemment décrit, et constituer ainsi un objet de l'invention.

L'invention porte selon un autre aspect sur un procédé de fabrication d'un élément de préhension d'un équipement sportif tel que précédemment décrit, comportant les étapes de :
- formation simultanée du noyau et de la couche externe, et polymérisation de la matrice ;
- ponçage d'une surface extérieure de la couche externe de sorte à faire émerger de la matrice polymérisée le matériau textile de la couche externe.

Dans un tel procédé, la formation de la couche externe peut mettre en oeuvre un matériau textile entrelacé comportant des fils thermofusibles.

Dans un tel procédé, la formation simultanée du noyau et de la couche externe peut être réalisée par exemple par pultrusion.

D'autres particularités et avantages de l'invention apparaîtront encore dans la description ci-après.

Aux dessins annexés, donnés à titre d'exemples non limitatifs :
- la figure 1 présente schématiquement des barres asymétriques de gymnastique ;
- la figure 2 présente une vue en coupe transversale schématique d'un porte-mains de barres asymétriques conforme à un mode de réalisation de l'invention ;
- la figure 3 présente une vue en coupe transversale schématique d'un porte-mains de barres parallèles conforme à un mode de réalisation de l'invention ;
- la figure 4 présente un exemple de procédé, selon un mode de réalisation particulier d'un objet de l'invention.

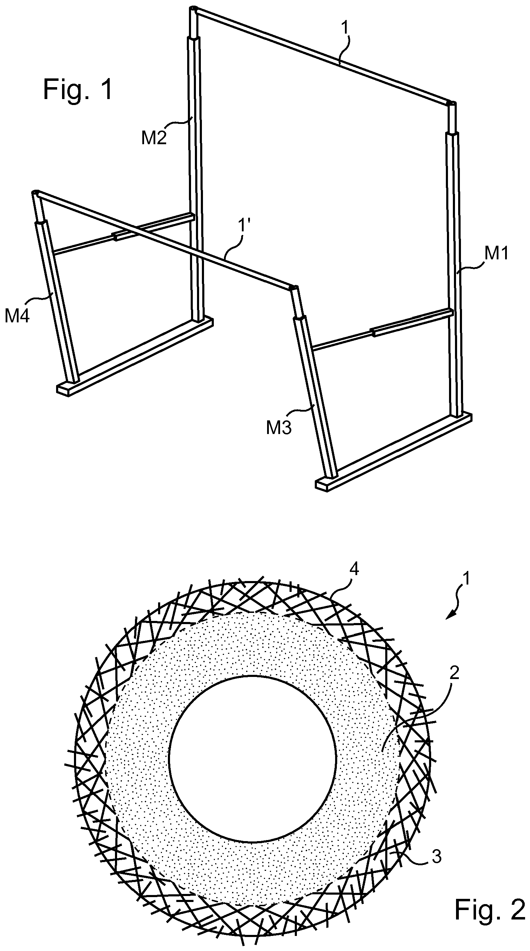

La figure 1 présente de manière schématique des barres asymétriques, qui sont des agrès de gymnastique féminine. Lors de l'exécution d'un programme aux barres asymétriques, la gymnaste exécute un certain nombre de figures, autour de deux barres positionnées dans des plans verticaux et horizontaux distincts. L'agrès comporte une structure comportant quatre montants M1, M2, M3 et M4, qui supportent les deux barres constituant des porte-mains 1, 1', c'est-à-dire des éléments de préhension de l'agrès lors de son utilisation.

La figure 2 présente une coupe transversale schématique d'un porte-mains 1 de barres asymétriques selon un mode de réalisation de l'invention. Le porte-mains 1 constitue l'élément de préhension des barres asymétriques. Il comporte un noyau 2 en matériau composite, qui comporte une ossature fibreuse et une matrice polymérique. En particulier, l'ossature fibreuse comporte généralement des fibres de verre. Alternativement ou en complément, le noyau peut comporter des fibres de carbone, et/ou de kevlar™. La matrice polymérique est généralement à base de résine thermodurcissable, à base de résines polymères de synthèse telles que par exemple les résines polyester isophtalique et résine époxy.

Les fibres (typiquement de verre, et/ou de carbone) que comporte le noyau peuvent typiquement se présenter avant mise en oeuvre sous forme de fils ou faisceau de fibres (généralement désigné selon la dénomination anglophone « roving »), de tissu, ou de mat. Le choix du type de fibres employées, l'association à une matrice adaptée, et la géométrie choisie permettent de conférer à l'élément obtenu l'essentiel des caractéristiques mécaniques souhaitées. Notamment, un porte-mains de barres asymétriques doit présenter une résistance suffisante et une certaine raideur afin que l'agrès complet soit conforme à une norme donnée.

Le noyau du porte-mains conforme au mode de réalisation de l'invention ici représenté est enveloppé d'un enrobage constituant une couche externe 3. La couche externe 3 comporte un matériau textile entrelacé, distinct de l'ossature. Un matériau textile entrelacé correspond typiquement à un tissu ou à une tresse obtenue par entrelacement de fibres textiles.

Ainsi, dans le cas où l'ossature fibreuse comporte également des fibres entrelacées, le matériau textile entrelacé de la couche externe 3 est distinct de celui du noyau. La couche externe est intimement liée au noyau, le matériau textile entrelacé de la couche externe 3 étant en partie noyé dans la matrice du matériau composite constituant le noyau. Le matériau textile entrelacé émerge de la matrice, sur la surface extérieure 4 du porte-mains.

En particulier, dans le cadre de l'application de l'invention à un porte-mains de barres asymétriques, le matériau textile entrelacé de la couche externe 3 est suffisamment découvert en surface du porte-mains pour offrir une bonne préhension, c'est-à-dire une bonne adhérence des mains de la gymnaste sur le porte-mains, ainsi qu'un bon confort d'usage et une certaine absorption de l'humidité. Similairement, dans toute autre application, le matériau textile entrelacé de la couche externe 3 est suffisamment découvert en surface de l'élément de préhension pour offrir une préhension, un confort d'usage, et éventuellement une certaine absorption de l'humidité, conforme à l'usage visé.

Préférentiellement, le tissu employé dans la couche externe 3 est essentiellement (c'est-à-dire très majoritairement, par exemple à plus de 90% en nombre ou en masse) constitué de fibres naturelles. Par exemple, les fibres naturelles mises en oeuvre peuvent être, entre autres, des fibres de lin, des fibres de jute, des fibres de bambou, des fibres de chanvre, ou tout mélange de plusieurs de ces fibres.

Selon le type de tissu employé, notamment selon la nature de ses fibres, le type de tissage, son épaisseur, etc., plusieurs couches superposées de tissus peuvent être nécessaires à l'obtention des caractéristiques de confort et/ou d'adhérence souhaitées. Deux, trois ou quatre couches superposées peuvent par exemple être mises en oeuvre. Dans le cadre de l'application de l'invention à un porte-mains de barres asymétriques, deux couches de tissu de lin peuvent typiquement être employées.

Dans le cadre de l'application de l'invention à un porte-mains de barres asymétriques, le noyau peut avoir un diamètre extérieur de l'ordre de 40mm (typiquement à plus ou moins 1mm près) et la couche externe une épaisseur de l'ordre de 0,7mm. Le noyau peut se présenter sous la forme d'un tube creux, de diamètre intérieur par exemple de l'ordre de 26mm.

Un porte-mains de barre asymétrique conforme à un mode de réalisation de l'invention peut, à titre d'exemple non limitatif, comporter environ 61% en masse de fibres de verre, 3% de fibres de carbones, et 5% de tissu de lin. La part de fibres de renfort, typiquement de fibres de verre et/ou de carbone) confère en grande partie au porte-mains les propriétés mécaniques recherchées. Les proportions et la disposition des fibres de renfort dans le noyau peuvent ainsi varier fortement d'une application à une autre afin de conférer au porte-mains ou autre élément de préhension les caractéristiques souhaitées.

La couche externe 3 peut comporter en outre un matériau thermofusible. Il peut notamment s'agir d'un matériau thermofusible classiquement disponible dans le commerce, notamment d'un adhésif thermoplastique (généralement désigné par l'expression anglophone « hot-melt »). La présence dans la couche externe d'un tel matériau thermofusible peut lui conférer un contact gommeux, ou une certaine pégosité, améliorant le confort de préhension. Le matériau thermofusible peut être issu de fils thermofusibles présents dans le matériau textile entrelacé employé pour l'obtention de la couche externe, avant obtention de cette dernière.

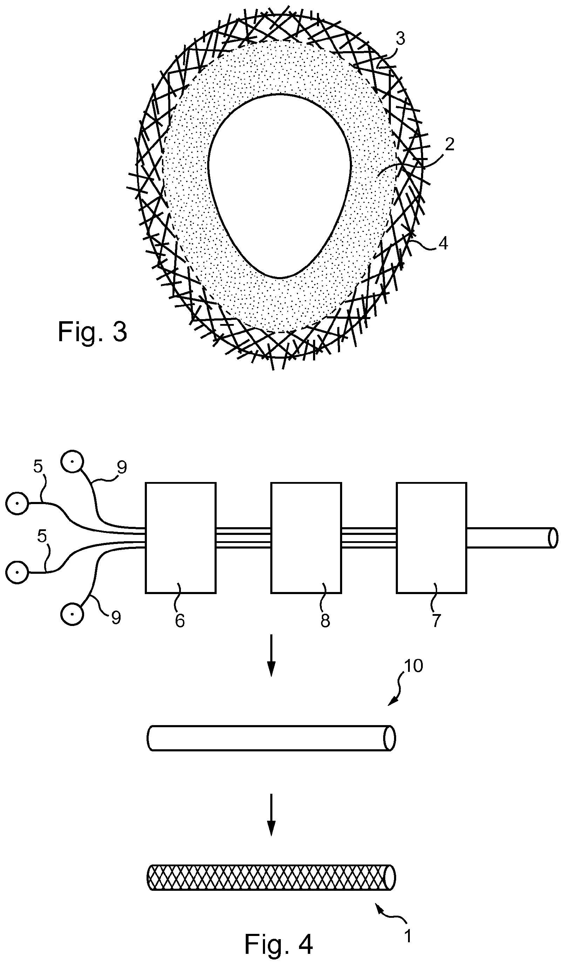

La figure 3 présente une coupe schématique d'un porte-mains de barres parallèles conforme à un mode de réalisation de l'invention. Les porte-mains de barres parallèles présentent la particularité de ne pas présenter une section circulaire, mais une forme ovalisée avec une surface d'appui supérieure légèrement aplatie. Néanmoins, un tel porte-mains peut être constitué d'un élément de préhension conforme à une variante de l'invention, constitué de manière analogue au porte-mains de section circulaire décrit en référence à la figure 2. Les caractéristiques mécaniques recherchées pour un porte-mains de barres parallèles sont différentes de celles recherchées pour un porte-mains de barres asymétriques. Notamment, les porte-mains de barres parallèles doivent présenter une raideur en flexion importante notamment sous charge verticale. Ainsi, outre la géométrie de la section du noyau 3 (et au final du porte-mains), la constitution du noyau 3 est adaptée, typiquement en augmentant la quantité de renforts en carbone et en optimisant leur positionnement. Tout comme l'élément de préhension de la figure 2, l'élément de préhension de la figure 3 comporte une couche externe 3 comportant un matériau textile entrelacé (tissu, tresse) dont des fibres émergent de la matrice du matériau composite sur la surface extérieure 4 du porte-mains.

La figure 4 présente un exemple de procédé objet de l'invention, selon un mode de réalisation particulier. Dans une première étape, le noyau et la couche externe sont formés simultanément. Un procédé avantageux, représenté à la figure 4, permettant cette formation est le procédé de pultrusion.

La pultrusion (terme issu des termes anglophone « pull », signifiant « tirer », et « extrusion », identique en français) désigne un procédé dans lequel des fibres 5, typiquement des fibres de verre et/ou de carbone, par exemple sous forme de fils ou faisceaux de fils, sont tirés à travers un bain 6 d'une matrice liquide à base de résine polymérique dont ils se chargent, puis l'ensemble est tiré à travers une filière chauffée entrainant la polymérisation de la matrice. La filière confère à l'élément obtenu une section constante (comme dans un procédé d'extrusion). Selon le procédé considéré et les moyens employés pour sa mise en oeuvre, l'élément peut être préformé au moyen d'une préforme 8 avant le passage dans la filière chauffée 7.

Le matériau textile entrelacé 9, destiné à être inclus dans la couche externe de l'élément de préhension enveloppe les fibres 5 de l'ossature fibreuse du noyau lors de la pultrusion. Le matériau textile entrelacé est ainsi noyé dans la matrice polymérique lors de la pultrusion. Il peut s'agir notamment d'un tissu ou d'une tresse contenant essentiellement des fibres naturelles, par exemple des fibres de lin, des fibres de jute, des fibres de bambou, des fibres de chanvre, ou un mélange de plusieurs de ces fibres.

Dans une variante préférentielle de l'invention, le matériau textile entrelacé 9 peut contenir des fils thermofusibles. Dans le cadre d'un tissu, les fils thermofusibles peuvent notamment être mêlés aux fils de chaîne. Le matériau thermofusible fond, au moins en partie, sous l'effet de la polymérisation exothermique de la matrice et du chauffage de la filière 7. Le matériau thermofusible peut permettre d'aider au maintien en position, lors de la pultrusion, du matériau textile entrelacé. En outre, le matériau thermofusible présent dans la couche externe de l'élément de préhension offre des avantages précédemment mentionnés, en termes de confort et de préhension.

On obtient à la sortie de la filière chauffée 7 un élément allongé de section correspondant à la section souhaitée de l'élément de préhension. L'élément allongé est débité de sorte à obtenir un élément de préhension brut 10.

Dans une étape suivante du procédé, la surface extérieure de la couche externe de l'élément de préhension brut 10 est poncée de sorte à augmenter sa rugosité, et à faire émerger de la matrice le matériau textile entrelacé. Selon les propriétés recherchées d'adhérence dans la main et d'absorption de l'humidité, le ponçage sera plus ou moins important afin de faire plus ou moins émerger les fibres dudit matériau textile sur la surface extérieure de l'élément de préhension 1 ainsi obtenu.

Selon une autre variante d'un procédé conforme à l'invention, la pultrusion peut être remplacée par une stratification en moule.

L'invention ainsi développée offre un élément de préhension pour équipement sportif, pouvant être typiquement, mais pas exclusivement, un porte-mains d'agrès de gymnastique tel qu'un porte-mains de cheval d'arçon, anneaux, barres parallèles, et avantageusement de barres asymétriques. D'autres éléments de préhension d'équipements sportifs peuvent être réalisés conformément à l'invention, par exemple : la zone de préhension d'une rame, ou d'une pagaie, d'une perche de saut à la perche, d'un arc, d'une raquette, ou d'un guidon.

Un élément de préhension conforme à l'invention permet l'obtention d'une bonne qualité de préhension, tant en terme d'adhérence que de confort. Il offre, le cas échéant, également des qualités d'absorption d'humidité.

Un élément de préhension conforme à l'invention peut être obtenu par un procédé, également objet de l'invention, dans lequel le noyau composite et la couche externe qu'il comporte sont obtenus simultanément, par exemple par pultrusion. Cela réduit les coûts de fabrication. Par exemple, en ce qui concerne l'application de l'invention aux porte-mains de barres asymétriques, le plaquage du noyau avec une couche de bois n'est plus nécessaire.

## Revendications

1. Elément de préhension d'un équipement sportif, comportant un noyau (2) en matériau composite comportant une ossature fibreuse incluse dans une matrice polymérique,
l'élément de préhension comportant une couche externe (3) enveloppant le noyau (2), **caractérisé en ce que** la couche externe (3) comporte un matériau textile entrelacé, distinct de l'ossature, en partie noyé dans la matrice et émergeant de ladite matrice sur une surface extérieure (4) de l'élément de préhension.

2. Elément de préhension selon la revendication 1, dans lequel le matériau textile entrelacé est essentiellement constitué de fibres naturelles.

3. Elément de préhension selon la revendication 2, dans lequel le textile est constitué de fibres naturelles choisies parmi : des fibres de lin, des fibres de jute, des fibres de bambou, des fibres de chanvre.

4. Elément de préhension selon l'une des revendications précédentes, dont la couche externe (3) comporte deux à quatre couches superposées de matériau textile entrelacé.

5. Elément de préhension selon l'une des revendications précédentes, dans lequel l'ossature fibreuse comporte des fibres de verre, et/ou des fibres de carbone.

6. Porte-mains (1,1') d'un agrès de gymnastique, et préférentiellement de barres asymétriques ou de barres parallèles, constitué d'un élément de préhension selon l'une des revendications précédentes.

7. Equipement sportif comportant un élément de préhension selon l'une des revendications 1 à 5, ledit équipement sportif étant soit des barres asymétriques de gymnastique, soit des barres parallèles de gymnastique, soit un autre agrès de gymnastique, soit une rame, soit une pagaie, soit une perche de saut à la perche.

8. Procédé de fabrication d'un élément de préhension d'un équipement sportif selon l'une des revendications 1 à 5, comportant les étapes de :
- formation simultanée du noyau (2) et de la couche externe (1), et polymérisation de la matrice ;
- ponçage d'une surface extérieure (4) de la couche externe (3) de sorte à faire émerger de la matrice polymérisée le matériau textile de la couche externe.

9. Procédé de fabrication selon la revendication 8, dans lequel la formation de la couche externe (3) met en oeuvre un matériau textile entrelacé comportant des fils thermofusibles.

10. Procédé de fabrication selon la revendication 8 ou la revendication 9, dans lequel la formation simultanée du noyau (2) et de la couche externe (3) est réalisée par pultrusion.

## Patentansprüche

1. Greifelement für eine Sportausrüstung, enthaltend einen Kern (2) aus Verbundmaterial mit einem in einer Polymermatrix enthaltenen Fasergerippe, wobei das Greifelement eine den Kern (2) umhüllende Außenschicht (3) enthält, **dadurch gekennzeichnet, dass** die Außenschicht (3) ein von dem Gerippe separates, verwobenes Textilmaterial enthält, das teilweise in die Matrix eingebettet ist und an einer Außenfläche (4) des Greifelements aus der Matrix vorsteht.

2. Greifelement nach Anspruch 1, wobei das verwobene Textilmaterial im Wesentlichen aus natürlichen Fasern besteht.

3. Greifelement nach Anspruch 2, wobei das Textilmaterial aus natürlichen Fasern, ausgewählt aus Leinenfasern, Jutefasern, Bambusfasern, Hanffasern, besteht.

4. Greifelement nach einem der vorangehenden Ansprüche, wobei dessen Außenschicht (3) zwei bis vier übereinanderliegende Schichten aus verwobenem Textilmaterial enthält.

5. Greifelement nach einem der vorangehenden Ansprüche, wobei das Fasergerippe Glasfasern und/oder Kohlenstofffasern enthält.

6. Holm (1, 1') für ein Turngerät, vorzugsweise für Stufenbarren oder Parallelbarren, bestehend aus einem Greifelement nach einem der vorangehenden Ansprüche.

7. Sportausrüstung mit einem Greifelement nach einem der Ansprüche 1 bis 5, wobei die Sportausrüstung entweder ein Stufenbarren, ein Parallelbarren, ein anderes Turngerät, ein Ruder, ein Paddel oder ein Stab für Stabhochsprung ist.

8. Verfahren zum Herstellen eines Greifelements nach einem der Ansprüche 1 bis 5 für eine Sportausrüstung, umfassend die Schritte:
- gleichzeitiges Ausbilden des Kerns (2) und der Außenschicht (1) und Polymerisation der Matrix;
- Abschleifen einer Außenfläche (4) der Außenschicht (3), so dass das Textilmaterial der Außenschicht aus der polymerisierten Matrix hervortritt.

9. Herstellungsverfahren nach Anspruch 8, wobei bei dem Ausbilden der Außenschicht (3) ein verwobenes Textilmaterial mit wärmeschmelzbaren Fäden Verwendung findet.

10. Herstellungsverfahren nach Anspruch 8 oder Anspruch 9, wobei das gleichzeitige Ausbilden des Kerns (2) und der Außenschicht (3) durch Strangziehen erfolgt.

## Claims

1. Grip member of an item of sports equipment, comprising a core (2) of composite material comprising a fibrous reinforcement included in a polymer matrix,
the grip member comprising an outer layer (3) enveloping the core (2), **characterized in that** the outer layer (3) comprises an interlaced textile material, distinct from the reinforcement, partly embedded in the matrix and emerging from said matrix on an outside surface (4) of the grip member.

2. Grip member according to claim 1, wherein the interlaced textile material is substantially constituted by natural fibers.

3. Grip member according to claim 2, wherein the textile is constituted by natural fibers chosen from: linen fibers, jute fibers, bamboo fibers, hemp fibers.

4. Grip member according to one of the preceding claims, of which the outer layer (3) comprises two to four superposed layers of interlaced textile material.

5. Grip member according to one of the preceding claims, wherein the fibrous reinforcement comprises glass fibers, and/or carbon fibers.

6. Hand bar (1,1') of a gymnastics apparatus, and preferably of uneven bars or of parallel bars, constituted by a grip member according to one of the preceding claims.

7. Item of sports equipment comprising a grip member according to one of claims 1 to 5, said item of sports equipment being either uneven bars for gymnastics, or parallel bars for gymnastics, or another gymnastics apparatus, or an oar, or a paddle, or a pole-vaulting pole.

8. Process for manufacturing a grip member of an item of sports equipment according to one of claims 1 to 5, comprising the steps of:
- simultaneously forming the core (2) and the outer layer (1), and polymerization of the matrix;
- abrading an outside surface (4) of the outer layer (3) so as to make the textile material of the outer layer emerge from the polymerized matrix.

9. Manufacturing process according to claim 8, wherein the formation of the outer layer (3) employs an interlaced textile material comprising thermoplastic threads.

10. Manufacturing process according to claim 8 or claim 9, wherein the simultaneous forming of the core (2) and of the outer layer (3) is carried out by pultrusion
